# EUROPÄISCHE PATENTANMELDUNG

(11) **EP 4 620 301 A1**
(43) Veröffentlichungstag der Anmeldung: **24.09.2025**
(21) Anmeldenummer: 25159824.9
(22) Anmeldetag: 25.02.2025
(51) Int. Cl.: A01M 7/00

(54) **LANDWIRTSCHAFTLICHE VERTEILMASCHINE**

(30) Priorität: 13.03.2024 DE 102024107089
(71) Anmelder: Amazonen-Werke H. Dreyer SE & Co. KG, 49205 Hasbergen (DE)
(72) Erfinder: Kowollik, Daniel, 49205 Hasbergen-Gaste (DE); Eickhoff, Lennard, 49205 Hasbergen-Gaste (DE)

(57) **Zusammenfassung**

Die vorliegende Erfindung betrifft eine landwirtschaftliche Verteilmaschine (1), insbesondere Feldspritze, mit einem von einer Zugachse (2) getragenen Maschinenrahmen (3), an welchem ein Verteilgerät (4) zur Verteilung eines Verteilmaterials und ein zur Bevorratung des Verteilmaterials dienender Vorratsspeicher (5) angeordnet sind, bei welcher in Hauptfahrtrichtung (H) hinter der Zugachse (2) eine zusätzliche Stützachse (6) vorgesehen ist.

## Beschreibung

Die vorliegende Erfindung betrifft eine landwirtschaftliche Verteilmaschine, insbesondere Feldspritze, mit einem von einer Zugachse getragenen Maschinenrahmen, an welchem ein Verteilaggregat zur Verteilung eines Verteilmaterials und ein zur Bevorratung des Verteilmaterials dienender Vorratsspeicher angeordnet sind.

Gezogene landwirtschaftliche Verteilmaschinen mit einem von einer Zugachse getragenen Maschinenrahmen sind für verschiedene Anwendungen aus dem Stand der Technik bekannt.

In der Regel weisen die Verteilmaschinen eine Zugdeichsel auf, über welche der von der Zugachse getragene Maschinenrahmen nach Art eines Anhängers an eine Zugmaschine, beispielsweise einen Traktor oder ein ähnliches landwirtschaftliches Arbeitsgerät, angekuppelt werden kann.

Bei vielen landwirtschaftlichen Verteilmaschinen sind an dem Maschinenrahmen teilweise sehr große und auch schwergewichtige Verteilgeräte zur großflächigen Verteilung eines Verteilmaterials auf einer landwirtschaftlichen Nutzfläche und ein zur Aufnahme des Verteilmaterials dienender Vorratsspeicher angeordnet, in welchem eine größere Menge des Verteilmaterials bevorratet und mitgeführt werden kann.

Beispielsweise kann an dem Maschinenrahmen ein sehr breites Verteilgestänge angeordnet sein, welches aus dem das Verteilmaterial bevorratenden Vorratsspeicher kontinuierlich mit dem Verteilmaterial versorgt wird. Durch bahnartige Bewegung der Verteilmaschine entlang der landwirtschaftlichen Nutzfläche lässt sich das Verteilmaterial über das Verteilgerät in breiten Bahnen auf der Nutzfläche ausbringen. Weit verbreitet sind in diesem Bereich insbesondere Verteilmaschinen in Form von Feldspritzen, bei welchen ein flüssiges Verteilmaterial über das Verteilgestänge ausgebracht wird.

Bekannt sind aber auch Verteilmaschinen mit körnigen, granulat- oder pulverförmigen Verteilmaterialien, beispielsweise in Form von Saat- oder Düngemaschinen.

In der Regel ist bei derartigen landwirtschaftlichen Verteilmaschinen vorgesehen, dass das Verteilgerät von einer kompakten Transportstellung, in welcher die im Straßenverkehr zulässigen Gesamtmaße, insbesondere die Gesamtbreite, der landwirtschaftlichen Verteilmaschine entsprechend den gesetzlichen Bestimmungen eingehalten werden, in eine sehr viel breitere Verteilstellung überführt werden kann. In der Transportstellung wird beispielsweise bei einer als Feldspritze ausgebildeten Verteilmaschine das als Verteilgerät dienende Verteilgestänge in eine kompakt eingeklappte Transportposition überführt, in welcher sich das Verteilgerät in einer häufig etwas höherliegenden Position oberhalb des Maschinenrahmens befindet und zumindest im Wesentlichen parallel zur Fahrtrichtung der Verteilmaschine ausgerichtet ist. Um das Verteilgestänge in dessen Verteilstellung zu überführen, wird das Verteilgestänge ausgeklappt, wonach es sich quer zur Fahrtrichtung erstreckt und je nach Anwendungsfall, Arbeitsbreiten von mehr als 20 m, häufig sogar mehr als 30 m und teilweise sogar mehr als 40 m oder 50 m aufweisen kann.

In der ausgeklappten Stellung befindet sich das Verteilgerät am hinteren Ende des Maschinenrahmens und damit in Hauptfahrtrichtung der Verteilmaschine betrachtet hinter deren Zugachse. Diese weit hinten liegende Anordnung des Verteilgeräts bietet den Vorteil, dass über eine Höheneinstellung ein geringer Abstand des Verteilgeräts gegenüber der landwirtschaftlichen Nutzfläche noch unterhalb der Höhe des Maschinenrahmens eingestellt werden kann. Die Höhe des Verteilgeräts wird in vielen Fällen nämlich eher gering gewählt und kann je nach Art des ausgebrachten Verteilmaterials, der Wuchshöhe eines Pflanzenbestands, der aktuell herrschenden Umgebungsbedingungen wie insbesondere Wind u. Ä. über eine entsprechende Verstelleinrichtung auch variiert werden.

Als problematisch hat sich bei derartigen landwirtschaftlichen Verteilmaschinen erwiesen, dass sich die Schwerpunktverhältnisse der Verteilmaschine im Betrieb teilweise deutlich ändern. Dies liegt zum einen an dem sich im Betrieb kontinuierlich entleerenden Vorratsbehälter und zum anderen an dem zwischen der Transport- und der Verteilstellung verstellbaren, oftmals ein erhebliches Gewicht aufweisenden Verteilgerät.

Aufgrund geänderter Schwerpunktverhältnisse können sich hierdurch bei gezogenen landwirtschaftlichen Verteilmaschinen ungünstige Betriebsbedingungen ergeben. Denn während die Verteilmaschinen in den allermeisten Situationen ähnlich einem einachsigen Anhänger eine Kippneigung in Richtung der Kupplung des Zugfahrzeugs zeigen und durch deren Gewicht eine positive Stützlast an der Fahrzeugkupplung erzeugen, können in bestimmten Situationen, etwa bei ungünstigen Klappstellungen eines Verteilgestänges und weitgehend entleertem Vorratsbehälter, auch negative Stützlasten im Bereich der Kupplung an das Zugfahrzeug entstehen, die im Ergebnis also eine nach oben gerichtete Zugkraft auf die Kupplung ausüben. Derartige negative Stützlasten können zu ungünstigen Betriebsbedingungen führen, etwa dadurch, dass eine angetriebene Achse des Zugfahrzeugs entlastet wird oder beim Lösen der Kupplung unmittelbar eine Kippbewegung der Verteilmaschine droht.

Der vorliegenden Erfindung liegt daher die **Aufgabe** zugrunde, eine landwirtschaftliche Verteilmaschine anzugeben, bei welcher die Gefahr negativer Stützlasten auch im Falle ungünstiger Betriebsbedingungen auf einfache Art und Weise zuverlässig vermieden wird.

Diese Aufgabe wird durch eine landwirtschaftliche Verteilmaschine mit den Merkmalen des Patentanspruchs 1 **gelöst**.

Bei der landwirtschaftlichen Verteilmaschine, ist in Hauptfahrtrichtung der landwirtschaftlichen Verteilmaschine betrachtet, hinter der Zugachse eine zusätzliche Stützachse vorgesehen. Über die Stützachse können gezielt Kräfte in den Boden eingeleitet und hierdurch auch bei ungünstigen Schwerpunktlagen eine Kippneigung in Richtung der Kupplung erzeugt werden. Die über die Stützachse erzeugten Kräfte können nach Art einer Wippe als positive Stützlast in die auf der anderen Seite der Zugachse angeordnete Kupplung des Zugfahrzeugs eingeleitet werden. Hierdurch lassen sich negative Stützlasten auf einfache Art und Weise auch unter ungünstigen Betriebsbedingungen vermeiden.

Vorteilhafte Ausgestaltungen und Weiterbildungen sind Gegenstand der Unteransprüche.

Eine vorteilhafte Weiterbildung sieht in diesem Zusammenhang zunächst vor, dass das Verteilgerät von einer eingeklappten Transportstellung in eine ausgeklappte Verteilposition überführbar ist. In der Transportstellung kann das Verteilgerät, bei welchem es sich beispielsweise um ein Verteilgestänge handelt, eine kompakte Position einnehmen. In dieser Kompaktposition lässt sich die landwirtschaftliche Verteilmaschine unter Einhaltung der zulässigen Abmaße im öffentlichen Straßenverkehr bewegen. In der ausgeklappten Verteilposition kann das Verteilgestänge eine sehr viel breitere Verteilposition einnehmen und großflächig zur Verteilung eines Verteilguts benutzt werden.

Von Vorteil ist in diesem Zusammenhang ferner eine Ausgestaltung, bei welcher das Verteilgerät in der Transportstellung derart eingeklappt ist, dass sich dessen Schwerpunkt auf der in Hauptfahrtrichtung vorderen Seite der Zugachse befindet, und/oder dass das Verteilgerät in der Verteilposition derart ausgeklappt ist, dass sich dessen Schwerpunkt auf der in Hauptfahrtrichtung hinteren Seite der Zugachse befindet. Durch die in der Transportstellung auf der in Hauptfahrtrichtung vorderen Seite der Zugachse angeordneten Schwerpunkt werden negative Stützlasten im Transport vermieden, da das Gewicht des Verteilgeräts eine Kippneigung in Richtung der Kupplung des Zugfahrzeugs erzeugt. Durch die Anordnung des Schwerpunkts auf der in Hauptfahrtrichtung hinteren Seite der Zugachse in der Verteilposition wird dieser Effekt umgekehrt, wodurch die Gefahr negativer Stützlasten steigt. Allerdings kann durch die weit hinten an dem Maschinenrahmen liegende Anordnung hinter der Zugachse eine tief liegende und durchgängige Anordnung des Verteilgeräts erreicht werden.

Eine weitere vorteilhafte Ausgestaltung der Erfindung sieht vor, dass sich das Verteilgerät in der Transportstellung im Wesentlichen parallel und in der Verteilstellung im Wesentlichen quer zur Hauptfahrtrichtung erstreckt.

Eine weitere vorteilhafte Ausgestaltung sieht vor, dass die Stützachse über mindestens eine Verstelleinrichtung, insbesondere eine hydraulisch arbeitende Verstelleinrichtung, gegenüber dem Maschinenrahmen verstellbar angeordnet ist. Über die Verstelleinrichtung kann die Position der Stützachse verstellt werden. Insbesondere kann die Position der Stützachse gegenüber dem Maschinenrahmen verstellt werden. Auch kann die über die Stützachse in den Boden eingeleitete Achslast gezielt eingestellt werden. In Situationen, in denen eine negative Stützlast am Zugfahrzeug droht, kann die Achslast der Stützachse erhöht und nach Art einer Wippe als positive Stützlast auf die Kupplung des Zugfahrzeugs übertragen werden.

Eine in diesem Zusammenhang vorteilhafte Weiterbildung sieht vor, dass die Stützachse derart zwischen einer Aktivstellung und einer Passivstellung bewegbar ist, dass der Maschinenrahmen in der Aktivstellung über die Stützachse gegenüber dem Boden abgestützt ist und der Maschinenrahmen in der Passivstellung über die Stützachse nicht gegenüber dem Boden abgestützt ist. Die Stützachse kann insbesondere in der Verteilstellung des Verteilgeräts in dessen Aktivstellung überführt werden. Sofern die Vorschriften des Straßenverkehrs dies erfordern, kann die Stützachse auch in der Transportstellung des Verteilgeräts, etwa im öffentlichen Straßenverkehr, dazu genutzt werden, das Gewicht der landwirtschaftlichen Verteilmaschine auf zwei Achsen, nämlich die Zugachse und die Stützachse, zu verteilen.

Eine Weiterbildung der Erfindung sieht ferner vor, dass über die Verstelleinrichtung die Achslast der Stützachse verstellbar ist. Die Achslast kann derart eingestellt werden und/oder einstellbar sein, dass sich zumindest überwiegend eine positive und/oder vergrößerte Stützlast an der Kupplung zum Zugfahrzeug einstellt.

Ferner wird vorgeschlagen, dass eine Steuereinrichtung zur Ansteuerung der mindestens einen Verstelleinrichtung vorgesehen ist. Über die Steuereinrichtung können die Einstellungen der Verstelleinrichtung im laufenden Betrieb verändert werden.

Eine weitere Ausgestaltung sieht vor, dass die Steuereinrichtung die Verstelleinrichtung anhand gemessener, vordefinierter oder eingegebener Parameter ansteuert, insbesondere anhand der Lage eines Schwerpunkts der Verteilmaschine, der Stellung des Arbeitsgeräts, eines Füllstands des Vorratsspeichers, eines Neigungswinkels einer Arbeitsebene und/oder fahrzeugspezifischer Vorgaben einer Zugmaschine.

Darüber hinaus wird vorgeschlagen, dass die Steuereinrichtung derart eingerichtet ist, dass die Verstelleinrichtung unabhängig vom Betriebszustand der Verteilmaschine eine Achslast erzeugt, über welche im Bereich einer Anhängekupplung eine positive Stützlast resultiert.

Weiterhin wird vorgeschlagen, dass die Spurweite der Stützachse derart an die Spurweite der Zugachse angepasst ist, dass die Räder der Stützachse innerhalb der Fahrspur der Räder der Zugachse laufen. Diese Ausgestaltung bietet mehrere Vorteile. Zum einen laufen die Stützräder der Stützachse im Bereich der bereits über die Zugachse verdichteten Spur. Insoweit können die über die Stützachse abgeleiteten Stützkräfte bzw. deren Achslast besonders gut eingeleitet werden. Zudem wird eine zusätzliche Beeinträchtigung des Bestandes, beispielweise der mittels einer Feldspritze behandelten Pflanzen, durch die Stützachse vermieden.

Eine weitere Ausgestaltung sieht vor, dass der Raddurchmesser der Räder der Zugachse größer ist als der Raddurchmesser der Räder der Stützachse, vorzugsweise um einen Faktor von mindestens zwei, noch bevorzugter um einen Faktor von mindestens drei, noch bevorzugter um einen Faktor von mindestens vier. Hierdurch ergeben sich besonders kompakte Gesamtmaße der Verteilmaschine.

Eine weitere Ausgestaltung der Erfindung sieht vor, dass die Räder der Stützachse um eine sich im Wesentlichen vertikal erstreckende Drehachse angeordnet sind. Die Drehachse kann als Nachlauflenkachse ausgebildet sein, wodurch sich eine selbstlenkende Anordnung der Räder ergibt. Auch hierdurch ergeben sich gute Laufeigenschaften der Verteilmaschine, wobei sich insbesondere im Falle von Kurvenfahren ein spurtreuer Nachlauf realisieren lässt.

Vorteilhafterweise wird schließlich weiter vorgeschlagen, dass die Stützachse lenkbar ausgeführt ist. Auch dies kann einem guten Laufverhalten der Verteilmaschine insbesondere für Kurvenfahrten zuträglich sein.

Bevorzugt kann das vorstehend beschriebene Verteilgerät bzw. Verteilgestänge pendelnd und/oder schwenkbar um eine horizontal und parallel zur Fahrtrichtung ausgerichtete Schwenkachse gelagert und/oder in einer definierten Höhe zum Boden und/oder einem Pflanzenbestand geführt sein. Ferner bevorzugt kann das Verteilgerät bzw. Verteilgestänge bei einer als Feldspritze ausgebildeten Verteilmaschine nach Art eines Spritzgestänges ausgeführt sein, mit mehreren entlang des Spritzgestänges angeordneten Spritzdüsen. Alternativ oder zusätzlich kann das Verteilgerät bzw. Verteilgestänge mehrere lateral zum Maschinenrahmen verbringbare Ausleger umfassen, welche jeweils besonders bevorzugt in mehrere, über Gelenke miteinander verbundene, Gestängebschnitte bzw. Gestängesegmente unterteilt sind.

Weitere Einzelheiten und Vorteile der Erfindung sollen nachfolgend unter Zuhilfenahme der beigefügten Zeichnungen eines Ausführungsbeispiels erläutert werden. Darin zeigen in jeweils stark schematisierter Ansicht:
- Fig. 1: eine seitliche Ansicht eines landwirtschaftlichen Gespanns, bestehend aus einer Zugmaschine sowie einer gezogenen landwirtschaftlichen Verteilmaschine in deren Transportstellung bei Straßenfahrt,
- Fig. 2: eine seitliche Ansicht des landwirtschaftlichen Gespanns gemäß der Darstellung in Fig. 1, in welcher sich die Verteilmaschine in deren Verteilstellung auf einer landwirtschaftlichen Nutzfläche befindet,
- Fig. 3: eine seitliche Ansicht des landwirtschaftlichen Gespanns gemäß der Darstellung in Fig. 2, bei welcher sich die Stützachse in deren Aktivstellung befindet,
- Fig. 4: eine Draufsicht der Verteilmaschine in deren Transportstellung,
- Fig. 5: eine Draufsicht der Verteilmaschine in deren Verteilstellung und
- Fig. 6: eine der Ansicht in Fig. 1 entsprechende Ansicht des landwirtschaftlichen Gespanns, bei welchem sich die Stützachse in deren Aktiv-stellung befindet.

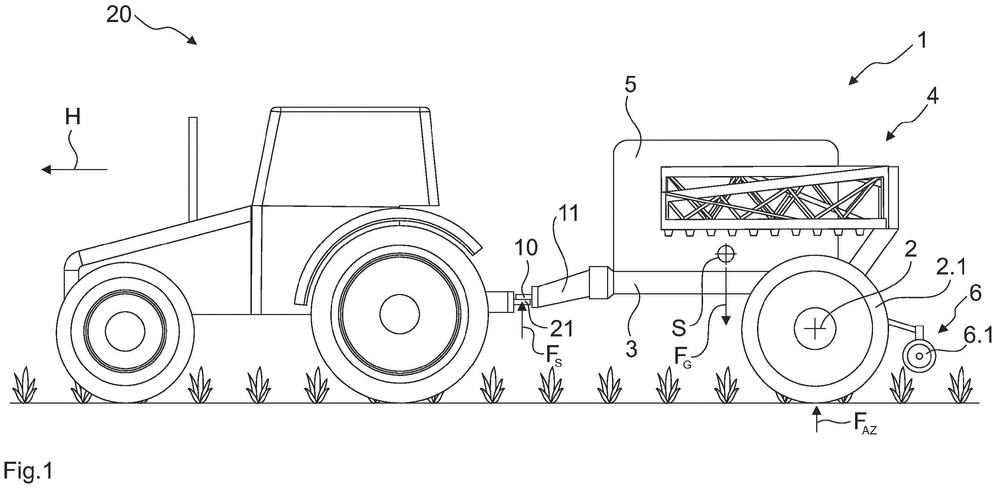

Fig. 1 zeigt in seitlicher Ansicht ein landwirtschaftliches Gespann, bestehend aus einer landwirtschaftlichen Zugmaschine 20, an welche eine gezogene Verteilmaschine 1 angehängt ist.

Bei der Zugmaschine 20 handelt es sich um einen Traktor, an dessen in Hauptfahrtrichtung H hinterem Ende eine Kupplung 21 zum Ankuppeln eines Kupplungselements 10 der Verteilmaschine 1 vorgesehen ist. Die Kupplung 21 und das Kupplungselement 10 können als Teile einer Zugmaul- oder Kugelkupplung oder einer ähnlichen Kupplungsvorrichtung ausgebildet sein.

Bei der Verteilmaschine 1 handelt es sich um eine gezogene Feldspritze zur Ausbringung eines flüssigen Verteilmaterials, beispielsweise eines Pflanzenschutzmittels. Die Verteilmaschine 1 verfügt über keinen eigenen Antrieb und wird von der Zugmaschine 20 gezogen.

Die Verteilmaschine 1 ist nach Art eines einachsigen Anhängers ausgestaltet und weist einen Maschinenrahmen 3 auf. Im Bereich dessen vorderen Endes ist der Maschinenrahmen 3 über das Kupplungselement 10 mit der Zugmaschine 20 verbunden. Der Maschinenrahmen 3 und das Kupplungselement 10 sind über eine Deichsel 11 miteinander verbunden.

Der Maschinenrahmen 3 wird von einer Zugachse 2 getragen. Die Zugachse 2 weist eine vergleichsweise relativ große Bereifung mit Rädern 2.1 auf und ist im vorliegenden Ausführungsbeispiel als Einfachachse ausgestaltet. Es wären jedoch auch Ausgestaltungen mit einer Tandemachse denkbar.

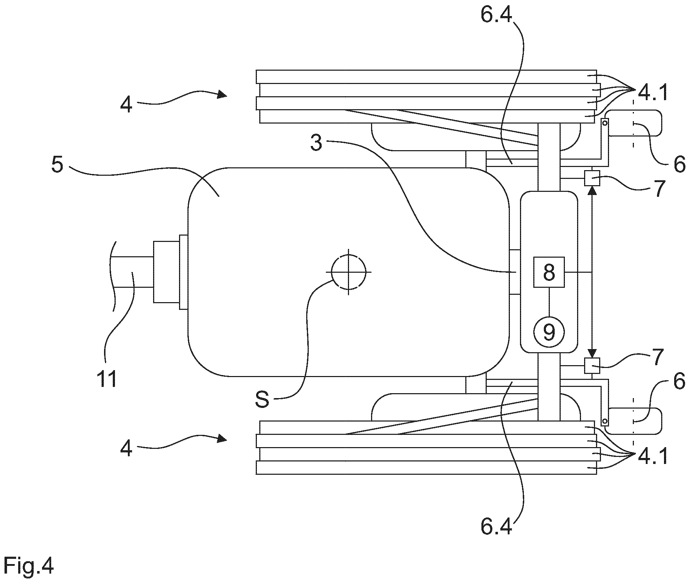

An dem Maschinenrahmen 3 ist als wesentliches Element der Verteilmaschine 1 ein Verteilgerät 4 angeordnet. Bei dem Verteilgerät 4 handelt es sich um ein Verteilgestänge. Das Verteilgerät 4 ist aus mehreren Einzelsegmenten 4.1 zusammengesetzt. Die Einzelsegmente 4.1 sind gelenkig miteinander verbunden. Fig. 1 zeigt die Transportstellung des Verteilgeräts 4, in welcher die Einzelsegmente 4.1 in eine kompakte Stellung zusammengeklappt sind. Die dieser Stellung nimmt das Verteilgerät 4 eine kompakte Transportposition ein. Das Verteilgerät 4 erstreckt sich parallel zur Hauptfahrtrichtung H, vgl. auch Fig. 4. In der Transportposition werden die im öffentlichen Straßenverkehr vorgegebenen Transportmaße eingehalten, weshalb die Verteilmaschine 1 mittels der Zugmaschine 20 gemäß der Darstellung in Fig. 1 im öffentlichen Straßenverkehr bewegt werden kann. In der in Fig. 1 dargestellten Transportstellung befindet sich der Schwerpunkt des Verteilgeräts 4 in Hauptfahrtrichtung H der Zugmaschine 20 betrachtet vor der Zugachse 2.

Neben dem als Verteilgestänge ausgebildeten Verteilgerät 4 ist an dem Maschinenrahmen 3 als weiteres wesentliches Element der Verteilmaschine 1 ein Vorratsspeicher 5 angeordnet. Der Vorratsspeicher 5 ist mit einer großen Menge Verteilmaterial zur Versorgung des Verteilgeräts 4 befüllt. Aus dem Vorratsspeicher 5 kann dem Verteilgerät 4 im Betrieb der Verteilmaschine 1 kontinuierlich Verteilmaterial zugeführt werden, beim Ausführungsbeispiel ein flüssiges Verteilgut, etwa ein Pflanzenschutz- oder ein Düngemittel.

In der Darstellung gemäß Fig. 1 befindet sich der Schwerpunkt S der Verteilmaschine 1 in Hauptfahrtrichtung H betrachtet vor der Zugachse 2 der Verteilmaschine 1. Aus diesem Grund neigt die Verteilmaschine 1 dazu, in Richtung des Zugfahrzeugs zu kippen.

Die Gewichtskraft F_{G} der Verteilmaschine 1 verteilt sich auf die über die Zugachse 2 in den Boden abgeleitete Achslast F_{AZ} sowie die auf der Kupplung 21 lastende Stützlast Fs. Das Vorzeichen der Stützlast Fs ist positiv, da das Gewicht der Verteilmaschine 1 von oben her auf der Kupplung 21 der Zugmaschine 20 lastet.

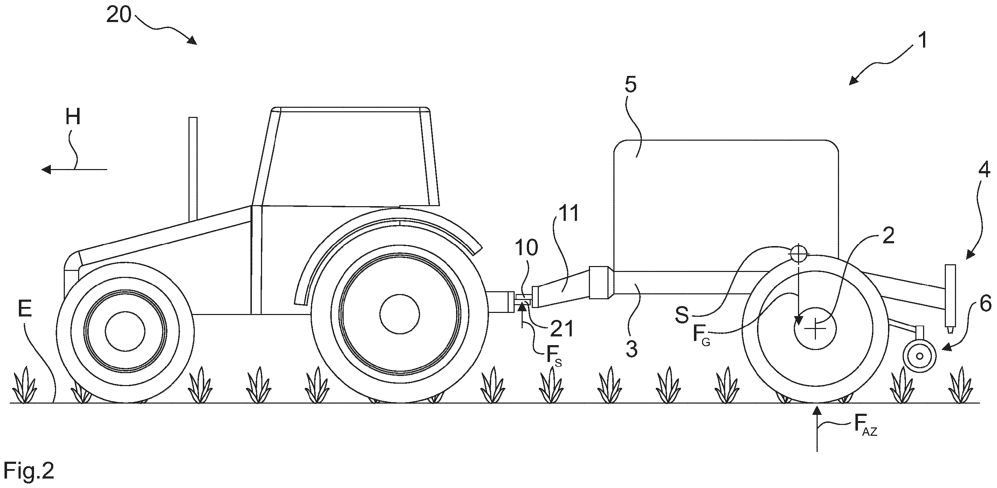

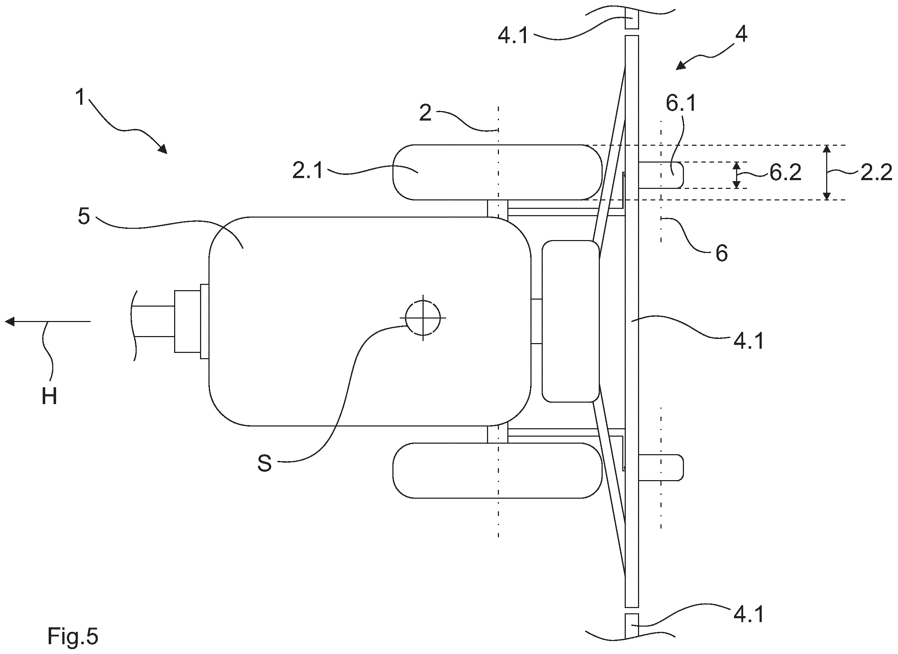

Im Gegensatz zu der Darstellung in Fig. 1 befindet sich das Gespann gemäß der Darstellung in Fig. 2 auf einer landwirtschaftlichen Nutzfläche. Zudem ist das Verteilgerät 4 von dessen in Fig. 1 dargestellter Transportstellung in dessen Verteilstellung überführt, in welcher es eine sehr große Arbeitsbreite aufweist. Die Arbeitsbreite kann mehr als 20 m, vorteilhafterweise mehr als 30 m und noch vorteilhafter mehr als 40 m aufweisen. In der Verteilstellung gemäß der Darstellung in Fig. 2 wurden die Einzelsegmente 4.1 des Verteilgeräts 4 gegeneinander verklappt und bilden ein sich durchgängig am hinteren Ende der Verteilmaschine 1 erstreckendes Verteilgestänge, vgl. auch die Darstellung in Fig. 5. Im Gegensatz zu der Transportstellung, in welcher sich die Einzelsegmente 4.1 parallel zur Hauptfahrtrichtung H erstrecken, erstrecken sich die Einzelsegmente 4.1 in der Verteilstellung quer zur Hauptfahrtrichtung H.

Wie aus dem Vergleich der Darstellungen in den Fig. 1 und 2 deutlich wird, ist das Verteilgerät 4 am hinteren Ende des Maschinenrahmens 3 an die Verteilmaschine 1 angebunden. Zudem wurde das Verteilgerät 4 gegenüber der Transportstellung abgesenkt, um in geringem Abstand über einen zu behandelnden Pflanzenbestand der landwirtschaftlichen Nutzfläche geführt werden zu können. Auf diese Weise lassen sich die Pflanzen des Bestands effizient mit dem Verteilmaterial behandeln.

Wie die Darstellung in Fig. 2 dies ferner erkennen lässt, hat sich der Schwerpunkt S der Verteilmaschine 1 aufgrund des geänderten Klappzustands des Verteilgeräts 4 aus der ursprünglichen Position gemäß der Darstellung in Fig. 1 in Richtung der Zugachse 2 verschoben.

Beim Ausführungsbeispiel befindet sich der Schwerpunkt S in Hauptfahrtrichtung H betrachtet noch kurz vor der Zugachse 2. Da der Schwerpunkt S jedoch sehr viel näher an die Zugachse 2 herangerückt ist, wird ein größerer Anteil der Gewichtskraft F_{G} nun über die Zugachse 2 übertragen, d. h. die Achslast F_{AZ} ist sehr viel größer als dies noch im Falle der Straßenfahrt mit eingeklapptem Verteilgerät 4 gemäß Fig. 1 der Fall war. Zudem ergibt sich eine geringere Stützlast F_{AS} im Bereich der Kupplung 21 der Zugmaschine 20. Die Stützlast Fs ist gemäß der Darstellung in Fig. 2 zwar noch positiv, d. h. die Verteilmaschine 1 drückt von oben her noch auf die Kupplung 21 der Zugmaschine 20, der Betrag der Stützlast Fs ist aufgrund des einen anderen Klappzustand einnehmenden Verteilgeräts 4 und dem dadurch insgesamt nach hinten verlagerten Schwerpunkts S jedoch deutlich geringer als in Fig. 1. Bereits in dieser Situation kann es allerdings unter sehr ungünstigen Umständen zu negativen Stützlasten Fs kommen, beispielsweise aufgrund eines ungünstigen Neigungswinkels der landwirtschaftlichen Nutzfläche.

Hinzu kommt, dass der Schwerpunkt S mit sich entleerendem Vorratsspeicher 5 im Laufe des Verteilvorgangs noch weiter nach hinten wandert und sich bei nahezu vollständig entleertem Vorratsspeicher 5 sogar in den Bereich hinter der Zugachse 2 verlagern kann. In diesem Fall wäre die Stützlast Fs dann negativ.

Um diesem Effekt entgegenzuwirken, weist die Verteilmaschine 1 eine zusätzliche Stützachse 6 auf, die hinter der Zugachse 2 angeordnet ist.

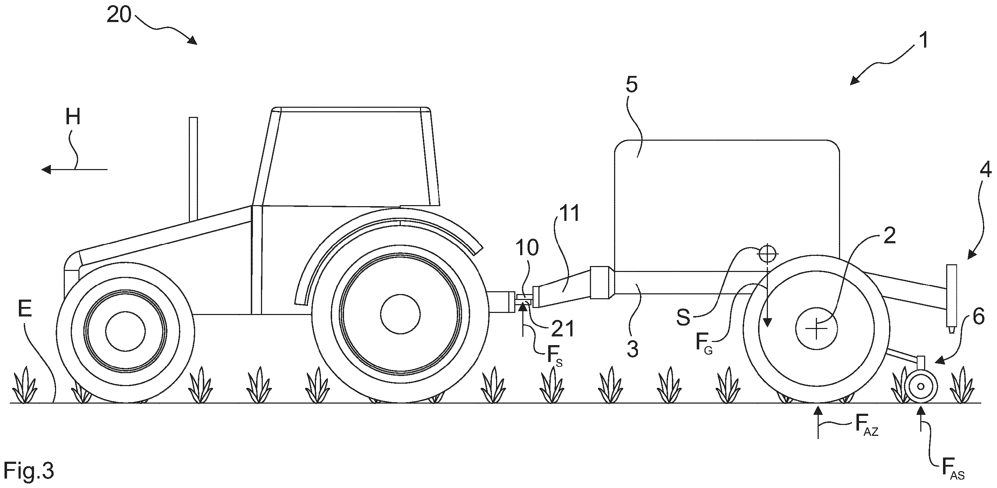

Gemäß den Darstellungen in den Fig. 1 und 2 befindet sich die Stützachse 6 in deren Passivstellung. In der Passivstellung hat die Stützachse 6 keinen Kontakt zum Boden und trägt nicht zur Übertragung der Kräfte bei. Im Gegensatz dazu wurde die Stützachse 6 in Fig. 3 in deren Aktivstellung überführt. In der Aktivstellung hat die Stützachse 6 Kontakt zum Boden und bildet eine zusätzliche Abstützung für den Maschinenrahmen 3 der Verteilmaschine 1.

Um die Laufeigenschaften der Verteilmaschine 1 in deren Aktivstellung nicht zu beeinträchtigen, sind die Räder 6.1 der Stützachse 6 kleiner als die Räder 2.1 der Zugachse 2. Beim Ausführungsbeispiel sind die Räder 6.1 der Stützachse 6 um sich in vertikaler Richtung erstreckende Nachlauflenkachsen 6.3 frei drehbar angeordnet. Die Nachlauflenkachsen 6.3 sind derart angeordnet, dass die Räder 6.1 im Falle einer Kurvenfahrt der Verteilmaschine 1 selbsttätig nachlenken. Alternativ könnten die Räder 6.1 auch mit einer Vorrichtung zum aktiven Lenken verbunden sein.

Wie die Darstellung insbesondere in Fig. 5 dies erkennen lässt, weisen die Räder 2.1 der Zugachse 2 eine Spurweite 2.2 auf. Die Räder 6.1 der Stützachse 6 weisen eine Spurweite 6.2 auf. Die Spurweite 6.2 ist kleiner als die Spurweite 2.2. Die Räder 6.1 sind also schmaler als die Räder 2.1. Zudem sind die Räder 6.1 gegenüber den Rädern 2.1 derart angeordnet, dass diese innerhalb der Spurweite 2.2 der Räder 2.1 laufen. Dies hat den Vorteil, dass die kleineren Räder 6.1 der Stützachse 6 auf einer von den größeren Rädern 2.1 der Zugachse 2 verdichteten Fahrspur laufen. Auf diese Weise lassen sich über Stützachse 6 zuverlässig Lasten bzw. Kräfte in den Boden einleiten. Zudem wird der Pflanzenbestand geschont, da nur eine einzige, von der Zugachse 2 erzeugte Fahrspur entsteht.

Zur Verstellung zwischen der Passiv- und der Aktivstellung ist eine schematisch eingezeichnete Verstelleinrichtung 7 vorgesehen, über welche die Stützachse 6 angehoben und abgesenkt werden kann. Ferner kann über die Verstelleinrichtung 7 gezielt ein Druck auf den Boden ausgeübt und hierdurch die Stützlast Fs beeinflusst werden.

Die Verstelleinrichtung 7 ist gemäß der stark schematisierten Ansicht in Fig. 4 zwischen dem Maschinenrahmen 3 und der Stützachse 6 angeordnet. Beim Ausführungsbeispiel ist die Stützachse 6 über Längslenker 6.4 an dem Maschinenrahmen 3 angeordnet, wobei sich die Verstelleinrichtung 7 zwischen dem Maschinenrahmen 3 und den Längslenkern 6.4 befindet. Bei der Verstelleinrichtung 7 kann es sich insbesondere um eine hydraulische Verstelleinrichtung 7 handeln. Denkbar wären jedoch auch andere Arten von Verstelleinrichtungen 7, die beispielsweise auf elektrischer oder pneumatischer Basis arbeiten.

Die Verstelleinrichtung 7 kann auf unterschiedliche Art und Weise angesteuert werden. Beim Ausführungsbeispiel ist eine Steuereinrichtung 8 vorgesehen, über welche die Verstelleinrichtung 7 angesteuert wird. Die Steuereinrichtung 8 ist mit einem Sensor 9 verbunden. Die Steuereinrichtung 8 ist dazu eingerichtet, die Verstelleinrichtung 7 anhand von durch den Sensor 9 gemessenen Parametern anzusteuern, insbesondere anhand der Lage eines Schwerpunkts S der Verteilmaschine 1, der Stellung des Verteilgeräts 4, eines Füllstands des Vorratsspeichers 5 oder eines Neigungswinkels einer Arbeitsebene E. Alternativ oder zusätzlich kann die Verstelleinrichtung 7 auch anhand fahrzeugspezifischer Vorgaben der Zugmaschine 20 oder über eine manuelle Eingabe über ein in die Figuren nicht dargestelltes Bedienelement, beispielsweise in Form eines Bedienmonitors in der Zugmaschine und/oder an der Verteilmaschine 1, angesteuert werden. Auch diese Steuerungen können über die Steuereinrichtung 8 erfolgen.

Wie die Darstellung der in die Aktivposition überführten Stützachse 6 in Fig. 3 dies erkennen lässt, weist die Verteilmaschine 1 einen Schwerpunkt S auf, an welchem deren Gewichtskraft F_{G} angreift. Aufgrund des Gewichts des im Betrieb abgegebenen Verteilmaterials ist die Gewichtskraft F_{G} der Verteilmaschine 1 nicht konstant, sondern sinkt im Laufe des Betriebs.

Die Gewichtskraft F_{G} der Verteilmaschine 1 wird an drei Stellen in den Boden abgeleitet, nämlich einerseits über die Achslast F_{AZ} der Zugachse 2, die Achslast F_{AS} an der Stützachse 6 sowie die Stützlast Fs im Bereich der Kupplung 21. Über die Verstelleinrichtung 7 kann die Größe der Achslast F_{AS} an der Stützachse 6 verstellt werden, etwa durch Anpressen der Stützachse 6 auf den Boden. Hierdurch wird nicht nur die Achslast F_{AS} an der Stützachse 6 verstellt, sondern eine solche Verstellung hat auch Auswirkung auf die an der Kupplung 21 abgeleitete Stützlast Fs, die mit steigender Achslast F_{AS} aufgrund wippenartiger Kraftübertragung über den Maschinenrahmen 3 an der Stützachse 6 ebenfalls erhöht. Auf diese Weise kann die Gefahr negativer Stützlasten Fs auch in ungünstigen Fahrsituationen, beispielsweise im Falle stark geneigter landwirtschaftlicher Nutzflächen o. Ä., stark reduziert werden.

Durch die Aufbringung der Achslast F_{AS} auf die in der Aktivstellung befindliche Stützachse 6 wird der Schwerpunkt S gegenüber der Darstellung in Fig. 2 nach vorne verschoben. Es wird ein in Fig. 2 linksdrehendes Moment in Richtung der Kupplung 21 der Zugmaschine 20 erzeugt. Die Stützlast Fs wird hierdurch erhöht und die Gefahr einer negativen Stützlast Fs wird deutlich reduziert.

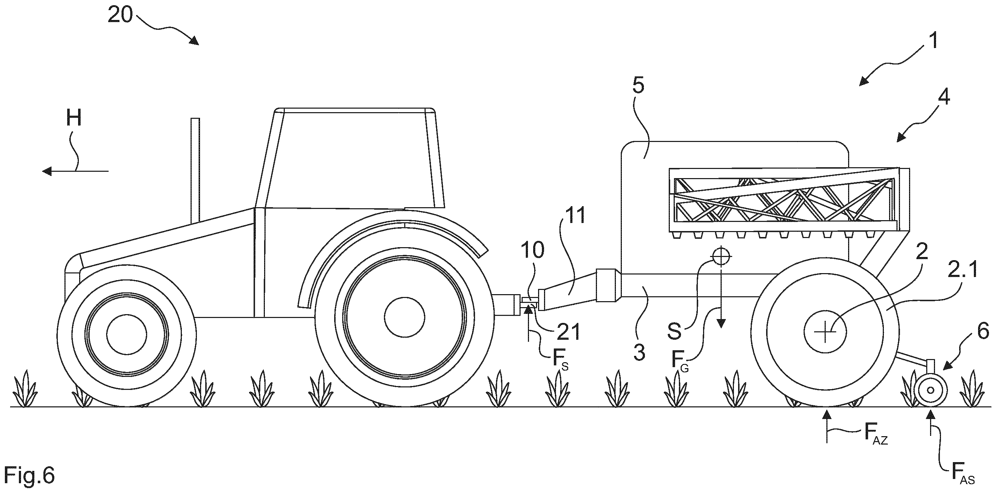

Neben der Reduktion der Gefahr negativer Stützlasten Fs kann die Stützachse 6 auch dazu dienen, im Straßenverkehr eine zusätzliche Achse zur Ableitung der Gewichtskraft F_{G} bereitzustellen, so wie dies in der Darstellung gemäß Fig. 6 zu erkennen ist. Sofern die Vorschriften im öffentlichen Straßenverkehr beispielsweise verlangen, dass das von einer Achse getragene Gesamtgewicht einen bestimmten Betrag nicht überschreiten darf, kann die Stützachse 6 auch im Straßenverkehr quasi hinzugeschaltet werden, um die Last der Zugachse 2 zu reduzieren und einen Anteil deren Last übernehmen.

Durch die hinter der Zugachse 2 angeordnete Stützachse 6 wird auf einfache Weise eine Möglichkeit geschaffen, negative Stützlasten Fs zu vermeiden.

### Bezugszeichen:

- 1: Verteilmaschine
- 2: Zugachse
- 2.1: Rad
- 2.2: Spurweite
- 3: Maschinenrahmen
- 4: Verteilgerät
- 4.1: Einzelsegment
- 5: Vorratsspeicher
- 6: Stützachse
- 6.1: Rad
- 6.2: Spurweite
- 6.3: Nachlauflenkachse
- 6.4: Längslenker
- 7: Verstelleinrichtung
- 8: Steuereinrichtung
- 9: Sensor
- 10: Kupplungselement
- 11: Deichsel

- 20: Zugmaschine
- 21: Kupplung

- H: Hauptfahrtrichtung
- S: Schwerpunkt
- E: Arbeitsebene
- F_{G}: Gewichtskraft
- Fs: Stützlast
- F_{AZ}: Achslast
- F_{AS}: Achslast
- S: Schwerpunkt

## Patentansprüche

1. Landwirtschaftliche Verteilmaschine (1), insbesondere Feldspritze, mit einem von einer Zugachse (2) getragenen Maschinenrahmen (3), an welchem ein Verteilgerät (4) zur Verteilung eines Verteilmaterials und ein zur Bevorratung des Verteilmaterials dienender Vorratsspeicher (5) angeordnet sind,
**dadurch gekennzeichnet,**
**dass** in Hauptfahrtrichtung (H) hinter der Zugachse (2) eine zusätzliche Stützachse (6) vorgesehen ist.

2. Verteilmaschine nach einem der vorhergehenden Ansprüche, **dadurch gekennzeichnet, dass** das Verteilgerät (4) von einer eingeklappten Transportstellung in eine ausgeklappte Verteilposition überführbar ist.

3. Verteilmaschine nach Anspruch 2, **dadurch gekennzeichnet, dass** das Verteilgerät (4) in der Transportstellung derart eingeklappt ist, dass sich dessen Schwerpunkt (S) auf der in Hauptfahrtrichtung (H) vorderen Seite der Zugachse (2) befindet, und/oder das Verteilgerät (4) in der Arbeitsposition derart ausgeklappt ist, dass sich dessen Schwerpunkt (S) auf der in Hauptfahrtrichtung (H) hinteren Seite der Zugachse (2) befindet.

4. Verteilmaschine nach einem der Ansprüche 2 oder 3, **dadurch gekennzeichnet, dass** sich das Verteilgerät (4) in der Transportstellung im Wesentlichen parallel und in der Verteilstellung im Wesentlichen quer zur Hauptfahrtrichtung (H) erstreckt.

5. Verteilmaschine nach Anspruch 1, **dadurch gekennzeichnet, dass** die Stützachse (6) über mindestens eine Verstelleinrichtung (7), insbesondere eine hydraulisch arbeitende Verstelleinrichtung (7), gegenüber dem Maschinenrahmen (3) bewegbar angeordnet ist.

6. Verteilmaschine nach Anspruch 5, **dadurch gekennzeichnet, dass** die Stützachse (6) derart zwischen einer Aktivstellung und einer Passivstellung bewegbar ist, dass der Maschinenrahmen (3) in der Aktivstellung über die Stützachse (6) gegenüber dem Boden abgestützt ist und der Maschinenrahmen (3) in der Passivstellung über die Stützachse (6) nicht gegenüber dem Boden abgestützt ist.

7. Verteilmaschine nach Anspruch 5 oder Anspruch 6, **dadurch gekennzeichnet, dass** über die Verstelleinrichtung (7) die Achslast (F_{AS}) der Stützachse (6) verstellbar ist.

8. Verteilmaschine nach einem der Ansprüche 5 bis 7, **gekennzeichnet durch** eine Steuereinrichtung (8) zur Ansteuerung der mindestens einen Verstelleinrichtung (7).

9. Verteilmaschine nach Anspruch 8, **dadurch gekennzeichnet, dass** die Steuereinrichtung (8) die Verstelleinrichtung (7) anhand gemessener, vordefinierter oder eingegebener Parameter ansteuert, insbesondere anhand der Lage eines Schwerpunkts (S) der Verteilmaschine (1), der Stellung des Verteilgeräts (4), eines Füllstands des Vorratsspeichers (5), eines Neigungswinkels einer Arbeitsebene (E) und/oder fahrzeugspezifischer Vorgaben einer Zugmaschine (20).

10. Verteilmaschine nach einem der Ansprüche 8 oder 9, **dadurch gekennzeichnet, dass** die Steuereinrichtung (8) derart eingerichtet ist, dass die Verstelleinrichtung (7) unabhängig vom Betriebszustand der Verteilmaschine (1) eine Achslast (F_{AS}) erzeugt, über welche im Bereich einer Kupplung (21) eine positive Stützlast (Fs) resultiert.

11. Verteilmaschine nach einem der vorhergehenden Ansprüche, **dadurch gekennzeichnet, dass** die Spurweite (6.2) der Stützachse (6) derart an die Spurweite (2.2) der Zugachse (2) angepasst ist, dass die Räder (6.1) der Stützachse (6) innerhalb der Fahrspur der Räder (2.1) der Zugachse (2) laufen.

12. Verteilmaschine nach einem der vorhergehenden Ansprüche, **dadurch gekennzeichnet, dass** der Raddurchmesser der Räder (2.1) der Zugachse (2) größer ist als der Raddurchmesser der Räder (6.1) der Stützachse (6), vorzugsweise um einen Faktor von mindestens zwei, noch bevorzugter um einen Faktor von mindestens drei, noch bevorzugter um einen Faktor von mindestens vier.

13. Verteilmaschine nach einem der vorhergehenden Ansprüche, **dadurch gekennzeichnet, dass** die Räder (6.1) der Stützachse (6) um eine sich im Wesentlichen vertikal erstreckende Drehachse drehbar angeordnet sind.

14. Verteilmaschine nach einem der vorhergehenden Ansprüche, **dadurch gekennzeichnet, dass** die Stützachse (6) lenkbar ausgeführt ist.
